Europäisches Patentamt

European Patent Office

Office européen des brevets

(19)

(11) EP 0 345 707 B1

## (12) FASCICULE DE BREVET EUROPEEN

(45) Date de publication et mention
de la délivrance du brevet:
**22.01.1997 Bulletin 1997/04**

(51) Int Cl.6: **H01M 4/58**, H01M 4/48,
C01G 51/00

(21) Numéro de dépôt: **89110158.6**

(22) Date de dépôt: **05.06.1989**

(54) **Procédé de fabrication d'un matériau cathodique pour générateur secondaire à anode de lithium, et application dudit matériau**

Verfahren zur Herstellung eines kathodischen Materials für einen sekundären Generator mit Lithiumanode und Anwendung dieses Materials

Process for the manufacture of a cathodic material for a secondary generator with a lithium anode, and use of said material

(84) Etats contractants désignés:
**DE FR GB IT NL SE**

(30) Priorité: **09.06.1988 FR 8807697**
**09.06.1988 FR 8807698**

(43) Date de publication de la demande:
**13.12.1989 Bulletin 1989/50**

(73) Titulaire: **SAFT (inscrite au Registre du Commerce sous le numéro 343 588 737) F-93230 Romainville (FR)**

(72) Inventeurs:
• **Lecerf, André**
**F-35740 Pacé (FR)**
• **Broussely, Michel**
**F-86240 Liguge (FR)**
• **Gabano, Jean-Paul**
**F-86000 Poitiers (FR)**

(74) Mandataire: **Weinmiller, Jürgen et al**
**Postfach 24**
**82336 Feldafing (DE)**

(56) Documents cités:
**EP-A- 0 017 400**        **EP-A- 0 205 856**
**EP-A- 0 243 926**        **US-A- 2 545 424**
**US-A- 4 567 031**

• **C.R. ACAD. SC. Paris, vol. 279, série B, 05 août 1974, pages 143-146, Paris, FR; F. KERN et al.: "Magnétisme - L'antiferromagnétique NiO additionné d'ions lithium jusqu'à saturation : ferromagnétisme de LiNiO2 et ferrimagnétisme de composés intermédiares caractérisés"**
• **PATENT ABSTRACTS OF JAPAN, vol. 12, no. 369 (E-665)[3216], 4 octobre 1988 & JP-A-63 121 260 (ASAHI CHEM. IND. CO. LTD) 25-05-1988**
• **JAPANESE JOURNAL OF APPLIED PHYSICS, vol. 19, no. 19-3, 1980, pages 305-313, Tokyo, JP; J.B. GOODENOUGH et al.: "Solid-solution oxides for storage-battery electrodes"**

## Description

La présente invention concerne un procédé de fabrication d'un matériau cathodique pour générateur secondaire à anode de lithium, et une application dudit matériau.

On connaît dans le domaine des générateurs électrochimiques au lithium rechargeables des matériaux cathodiques tels que $MoS_2$, $TiS_2$, $V_2O_5$ ou $LiCoO_2$. Les énergies spécifiques de ces matériaux sont respectivement de l'ordre de 241 Wh/kg, 502 Wh/kg, 471 Wh/kg et 688 Wh/kg. On sait également que des matériaux répondant à des formules du genre $Li_yNi_{2-y}O_2$ et $LiNi_{1-x}CO_xO_2$ sont susceptibles de présenter des énergies spécifiques très supérieures.

Des articles ont proposé des méthodes de synthèse de ce type de matériau.

Dans l'article de L.D. Dyer, B.S. Boric and G.P. Smith paru dans J. Amer. Chem. Soc. 73, 2452 (1951), on obtient $LiNiO_2$ en mettant en oeuvre une oxydation par un courant d'oxygène du nickel métallique plongé dans LiOH fondu à 800°C. La réaction dure 24 heures.

Dans l'article de N. Bronger, H. Bode und W. Klemm, paru dans Z. Anorg. Allg. Chem. 285, 322 (1956) on utilise la réaction de l'oxyde de nickel NiO et de l'oxyde de lithium $Li_2O$ à 750°C sous un courant d'oxygène sec, pour obtenir $LiNiO_2$.

La première méthode de synthèse permet de préparer seulement de petites quantités de produit. La deuxième méthode utilise l'oxyde de lithium $Li_2O$ qu'il n'est pas possible de se procurer facilement.

La demande de brevet européen EP-A-017 400 décrit un procédé de préparation de $Li_xNi_yO_2$ consistant à chauffer de la poudre de nickel sous oxygène en présence de $LiOH.H_2O$. Ce procédé ne permet pas d'aboutir à un matériau de formule très voisine de $LiNiO_2$.

La présente invention a donc pour but de proposer un procédé de fabrication des composés précités, plus simple à mettre en oeuvre que les procédés antérieurs.

La présente invention a pour objet un procédé de fabrication d'un matériau cathodique pour générateur électrochimique secondaire à anode de lithium, matériau répondant à la formule $Li_yNi_{2-y}O_2$, caractérisé par le fait que, pour obtenir des valeurs $0.93 < y < 1.22$, on mélange sous forme pulvérulente de l'oxyde de nickel NiO et de l'hydroxyde de lithium hydraté $LiOH.H_2O$, ce dernier étant en léger excès par rapport aux proportions équimolaires LiOH/NiO, et on chauffe à l'air le mélange à une température comprise entre 600°C et 800°C.

Un autre objet de la présente invention est un procédé de fabrication d'un matériau cathodique pour générateur électrochimique secondaire à anode de lithium, matériau répondant à la formule $LiNi_{1-x}CO_xO_2$, caractérisé par le fait que, pour obtenir des valeurs $0.09 < x < 0.5$, on mélange sous forme pulvérulente de l'oxyde de nickel NiO, de l'hydroxyde de lithium hydraté $LiOH.H_2O$ et de l'oxyde de cobalt $Co_2O_3$, dans des proportions équimolaires, et on chauffe à l'air le mélange à une température comprise entre 600°C et 800°C.

Pour accélérer le procédé, on chauffe une première fois à l'air, on réhomogénéise le mélange, on le chauffe une seconde fois à l'air ; la température de chauffage est comprise entre 600°C et 800°C environ et la durée du chauffage varie entre 1 heure et quelques heures selon la température et les quantités de produits utilisées.

Le procédé se déroule entièrement à l'air, ne nécessite pas une atmosphère d'oxygène pur, et un four à moufle ordinaire peut être utilisé. Les produits de base sont faciles à se procurer ; l'hydroxyde de lithium hydraté LiOH, $H_2O$ est la forme commerciale du produit.

Selon un mode préférentiel, l'homogénéisation se fait par broyage.

La présente invention a également pour objet une cathode pour un générateur électrochimique au lithium rechargeable, faisant application des matériaux issus du procédé précédent.

D'autres caractéristiques et des avantages de la présente invention apparaîtront au cours de la description suivante d'exemples de réalisation donnés à titre illustratif mais nullement limitatif. Dans le dessin annexé :

- La figure 1 reproduit un diagramme intensité/potentiel prouvant la réversibilité d'un matériau cathodique de type $Li_yNi_{2-y}O_2$ selon l'invention.
- Les figures 2a et 2b montrent l'évolution de la tension (V charge, V décharge) d'un générateur mettant en oeuvre le matériau précédent selon l'invention au cours du cyclage, en fonction de la quantité d'électricité mise en jeu.
- Les figures 3a et 3b sont analogues aux figures 2a et 2b pour un générateur de l'art antérieur.
- La figure 4 illustre des diagrammes A et B de diffraction des rayons X par deux matériaux de type $LiNi_{1-x}CO_xO_2$ selon l'invention.
- La figure 5 est un diagramme intensité/potentiel montrant la réversibilité du matériau cathodique selon l'invention (courbe A de la figure 4) Li $Ni_{0,91}$ $Co_{0,09}$ $O_2$.
- La figure 6 est un diagramme analogue à celui de la figure 5, montrant la réversibilité d'un autre matériau cathodique selon l'invention (courbe B de la figure 4) Li $Ni_{0,75}$ $Co_{0,25}$ $O_2$.
- La figure 7 est un diagramme analogue à celui des figures 5 et 6, montrant la réversibilité d'un autre matériau selon l'invention Li $Ni_{0,5}$ $Co_{0,5}$ $O_2$.
- Les figures 8a et 8b montrent les courbes de tension de charge VC et de décharge VD d'un générateur expérimental selon l'invention, au cours d'un cyclage.
- Les figures 9a et 9b montrent des courbes analogues à celles des figures 8a et 8b pour un matériau de l'art antérieur $LiCoO_2$.
- La figure 10 montre l'évolution de la capacité d'un générateur mettant en oeuvre le matériau $LiNi_{0,91} Co_{0,09} O_2$ selon l'invention en fonction du nombre de cycles (courbe E) comparée à celle d'un générateur de l'art antérieur (courbe F).

EXEMPLE I

On prépare tout d'abord un matériau cathodique selon l'invention de type $Li_y Ni_{2-y} O_2$ selon le procédé suivant :
Une mole de NiO, soit 74.71 g, est mélangée à une mole de lithine $LiOH H_2O$, soit 41.96 g. Le mélange est placé pendant une heure dans un broyeur à boulet, puis dans un creuset réfractaire silico-alumineux (terre réfractaire). Le creuset est chauffé à l'air à 700°C dans un four à moufle. Au bout d'une heure le creuset est retiré du four. Le mélange est broyé de nouveau pendant une heure, remis dans le creuset, puis chauffé à 700°C à l'air pendant 4 heures. Au bout de 4 heures le creuset est retiré du four de manière à refroidir rapidement le matériau.
Après un broyage le solide obtenu a été soumis à l'analyse chimique et à l'étude par diffraction des rayons X.
Par l'analyse chimique on a dosé le lithium, le nickel et le nombre d'oxydation n du nickel. En effet, dans la phase $LiNiO_2$, le nombre d'oxydation du nickel n'est pas exactement 3. Il est souvent inférieur à 3, ce qui correspond à la présence d'un peu de $Ni^{2+}$ à côté de $Ni^{3+}$ .
Le tableau I donne les résultats obtenus.

TABLEAU I

| | Li % | Ni % | n |
|---|---|---|---|
| Valeur trouvée | 6.35 | 60.1 | 2.87 |
| Valeur calculée pour LiNiO | 7.11 | 60.11 | 3 |

Le taux de lithium, inférieur à la valeur calculée, s'explique par une légère volatilisation au cours du chauffage. Le déficit en lithium peut être compensé par un léger excès de lithine au départ.
Dans le tableau II les distances réticulaires et les intensités des raies de diffraction des rayons X observées sont comparées aux valeurs de la fiche J.C.P.D.S. n° 9-63 relative à $LiNiO_2$.; h, k, l sont les indices de Miller définissant les plans cristallographiques du matériau.

TABLEAU II

| h k l | Fiche 9-63 | | Matériau selon l'invention | |
|---|---|---|---|---|
| | d Å | l | d Å | l |
| 003 | 4.72 | 100 | 4.72 | 100 |
| 101 | 2.45 | 40 | 2.45 | 40 |
| 006 | 2.36 | 12 | 2.36 | 6 |
| 012 | 2.35 | 15 | 2.35 | 15 |
| 104 | 2.04 | 95 | 2.04 | 73 |
| 015 | 1.862 | 11 | 1.873 | 11 |
| 107 | 1.570 | 20 | 1.575 | 9 |

EP 0 345 707 B1

Ce spectre de diffraction des rayons X du matériau obtenu par le procédé de l'invention montre donc que la phase présente est constituée essentiellement de $LiNiO_2$.

La caractérisation électrochimique de ce matériau cathodique a été ensuite effectuée selon deux méthodes classiques en électrochimie, la voltampérométrie cyclique et la coulométrie à courant imposé dont on rappelle ci-après les principes.

Dans les deux cas, le matériau cathodique à étudier est déposé sur un collecteur métallique de manière à constituer une électrode. Ce collecteur est choisi de telle sorte que, dans le domaine de potentiel étudié, qui correspond au domaine d'oxydation et réduction du matériau objet de l'invention, le métal ne participe pas aux réactions électrochimiques, et en particulier ne soit pas oxydé.

Dans les modes de réalisation décrits ci-après, le métal choisi est l'aluminium, mais d'autres métaux peuvent être choisis, comme par exemple le titane.

Le dépôt du matériau sur l'électrode est fait de telle sorte que le transfert d'électrons se fasse correctement entre celui-ci et le métal support. Ce transfert est assuré par l'addition de graphite. Afin d'assurer une adhérence suffisante du matériau sur le support, ce qui est une condition nécessaire à son bon fonctionnement, il est indispensable d'ajouter un liant. Dans les exemples décrits ci-après, le liant est la carboxyméthylcellulose.

Pour étudier électrochimiquement l'électrode du matériau cathodique ainsi réalisée, on réalise un couple avec une anode de lithium. Ces deux électrodes sont plongées dans un milieu électrolytique approprié et isolées électriquement l'une de l'autre au moyen d'un séparateur. Le milieu électrolytique doit posséder les caractéristiques suivantes. Il doit être non aqueux, stable vis-à-vis des électrodes, tant anode que cathode, dissoudre un sel de lithium pour assurer une conductivité ionique suffisante ($> 10^{-3}\Omega^{-1}$ $cm^{-1}$) et ne pas donner des réactions secondaires d'oxydation ou de réduction, qui pourraient nuire au fonctionnement du générateur ainsi formé. Pour ces raisons, il sera choisi dans la classe des solvants dits aprotiques, et résistants à l'oxydation, tels que les esters, les sulfones et les nitriles.

Dans les exemples décrits ci-après, le solvant utilisé est le carbonate de diméthyle.

Une association de plusieurs solvants peut parfaitement être envisagée, comme cela a été largement décrit et utilisé dans les générateurs à anode de lithium conformément au brevet français n° 2 378 361.

Cette association peut permettre des effets de synergie par combinaison de propriétés complémentaires.

le soluté est un sel de lithium, choisi parmi les solutés usuels pour générateurs à anode de lithium, et par ordre de préférence,

$LiAsF_6$, $LiBF_4$, $LiClO_4$, $LiCF_3SO_3$, $LiPF_6$, seuls ou en mélange.

Avec le composé obtenu plus haut on prépare donc une première électrode de la manière suivante : on réalise 0,5 g de mélange comprenant 10 % de $LiNiO_2$ selon l'invention, 89 % de graphite et 1 % de carboxyméthylcellulose (en pourcentages pondéraux) ; on disperse ce mélange dans 2,5 g d'eau.

Une masse de 23,2 mg de cette composition est déposée sur une plaque en aluminium de 1 cm2. On obtient, après évaporation de l'eau à 45°C, une masse de 3,9 mg du mélange sec.

Cette électrode est plongée dans une solution 2M de $LiAsF_6$ dans le carbonate de diméthyle (DMC), en regard avec une électrode de lithium d'environ 120 mg, offrant une surface de 2,5 cm2.

Une autre électrode de lithium est plongée dans la solution, près de la cathode, dont le potentiel servira de référence pour la mesure de la force électromotrice du couple lithium-matériau cathodique. Les électrodes étant éloignées les unes des autres dans la solution, un séparateur n'est pas nécessaire.

La cellule étant ainsi constituée, l'expérience consiste à imposer un potentiel contrôlé à la cathode, mesuré par rapport à l'électrode de référence, et à enregistrer le courant d'oxydation ou de réduction la traversant. Le potentiel imposé varie de façon linéaire en fonction du temps à la vitesse de 30 mV/minute, entre des bornes prédéterminées.

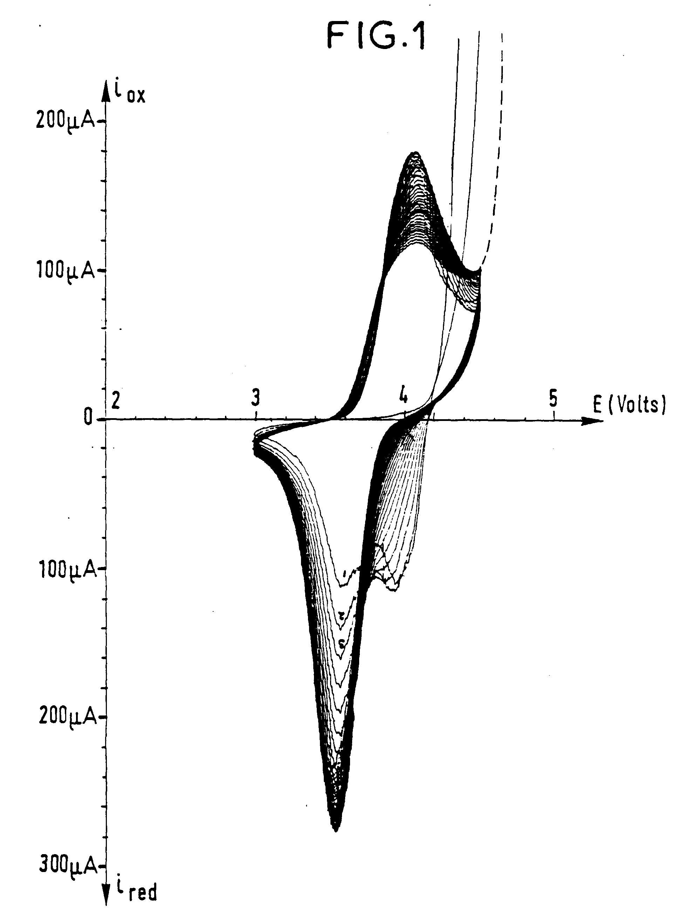

La figure 1 reproduit le diagramme intensité/potentiel ainsi obtenu. En abscisses on a reporté le potentiel E ( en volts) de la cathode mesuré par rapport à l'électrode de référence au lithium ; en ordonnées on a reporté le courant d'oxydation $i_{ox}$ ($\mu A$) et le courant de réduction $i_{red}$ ($\mu A$) traversant la cathode. Les numéros de références indiquent le numéro du cycle correspondant.

Le diagramme montre clairement que la cathode étudiée est réversible, selon la réaction :

$$LiNiO_2 \rightleftarrows Li_{1-x} NiO_2 + xLi^+ + xe^-$$

Le domaine d'oxydation du matériau se situe entre 3,5 V et 4,5 V, le domaine de réduction entre 4,2 et 3 V. On observe au cours des premiers cycles la formation de l'électrode. La première réaction électrochimique est une oxydation, puisque le matériau de départ est à l'état réduit, selon l'équation décrite plus haut. Le potentiel d'oxydation du premier cycle est effectivement plus important que lors des cycles suivants.

Les courants maxima des pics d'oxydation et de réduction sont respectivement de 180$\mu A$ et 270$\mu A$.

Pour des électrodes minces de ce type, où la matière active est en faible quantité, on peut rapporter le courant à la quantité totale de matière, supposée réagir au même instant. On obtient ainsi des courants maxima specifiques :

4

$j_{ox} = 464$ mA/g et $j_{red} = 692$ mA/g.

Dans l'exemple de mise en oeuvre suivant du matériau cathodique selon l'invention, on constitue un générateur rechargeable expérimental en plaçant une cathode du même type que celle décrite précédemment, mais contenant une proportion plus importante de matière active, soit (en pourcentage pondéraux) :

- Li NiO$_2$ 30 %
- graphite 69 %
- carboxyméthylcellulose 1 %,

0,5 g de ce mélange est dispersé dans 2,5 g d'eau.

On dépose une quantité suffisante du mélange sur une électrode d'aluminium de 1 cm2, pour obtenir un dépôt de matières sèches de 14,3 mg, soit 4,3 mg de matériau actif, ou 4,4 10$^{-3}$ moles.

Cette électrode est placée dans l'électrolyte en vis-à-vis d'une électrode de lithium, et séparée de celle-ci par une membrane microporeuse de polypropylène, d'une épaisseur de 50 microns. Les deux électrodes sont fermement maintenues contre le séparateur par deux plaques isolées, ne jouant aucun rôle dans la réaction électrochimique. Cet assemblage est plongé dans 5 ml d'électrolyte LiAsF$_6$ 2M dans le carbonate de diméthyle, au sein d'une cellule hermétiquement close. Des sorties de courant permettent d'appliquer un courant aux électrodes. Le lithium est en quantité importante, de capacité plus de 500 fois supérieure à la capacité de la cathode. Il ne limite donc pas les caractéristiques électriques du générateur.

Le générateur ainsi constitué est soumis à des cycles de charge-décharge à un courant fixe imposé de 0,2 mA, et entre des tensions V limites prédéterminées : Charge V $_{max}$ = 4, 25 V

$$\text{Décharge } V_{min} = 3V$$

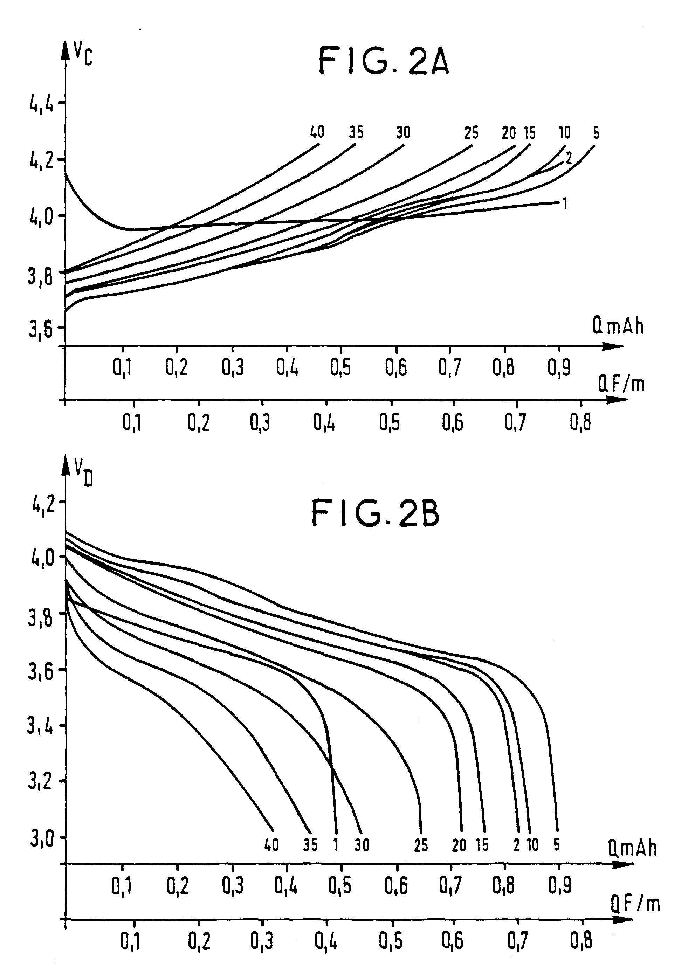

Les figures 2a et 2b représentent la tension en volts du générateur, enregistrée pendant le cyclage (V$_C$/charge, V$_D$/décharge), en fonction de la quantité d'électricité (Q) mise en jeu. Cette quantité d'électricité est exprimée en mAh, et en Faraday/mole. Les numéros de référence indiquent le numéro du cycle correspondant.

On calcule ainsi que, pour le cycle de capacité maximum (cycle n° 5), 0,77 Faraday par mole a été échangé, ce qui permet d'écrire la réaction:

$$LiNiO_2 \rightleftarrows Li_{0,23} NiO_2 + 0,77 \, Li^+ + 0,77e\text{-}.$$

Lors de la décharge, la réaction de réduction se produit à une tension moyenne de 3,8 V, ce qui permet de calculer une énergie spécifique libérée de 803 Wh/Kg, rapportée à la masse de matériau cathodique.

Cette valeur est très supérieure à celles qui ont été rappelées plus haut pour les matières cathodiques telles que MoS$_2$, TiS$_2$ et V$_2$O$_5$.

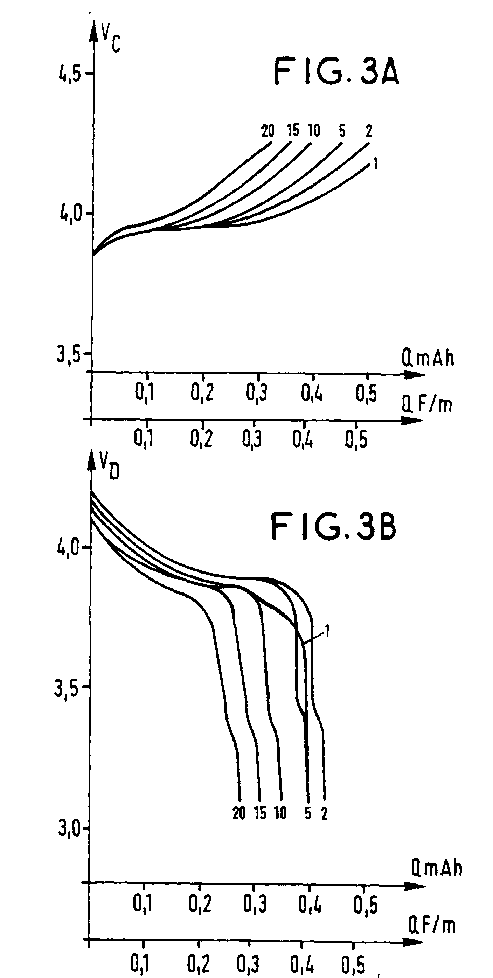

On a comparé ensuite les performances du matériau selon l'invention avec le matériau connu LiCoO$_2$. Pour cela on a réalisé une électrode contenant 3,6 mg de LiCoO$_2$ de la même manière que l'électrode selon l'invention. Les tests ont été réalisés dans les mêmes conditions que celles qui ont conduit aux courbes des figures 2a et 2b. On a obtenu les courbes apparaissant dans les figures 3a et 3b.

Le nombre de Faradays/mole maximum est de 0,44, ce qui conduit à une énergie spécifique calculée de 471 Wh/Kg, en tenant compte d'une tension moyenne de 3,95 V. Cette valeur est très inférieure à celle qui est obtenue lors de la mise en oeuvre du matériau selon l'invention.

EXEMPLE II

On prépare un second échantillon de matériau cathodique selon l'invention de type LiNi$_{1-x}$ Co$_x$O$_2$ par le procédé suivant :

Une mole de NiO, soit 74,71 g, est mélangée à 0,05 mole d'oxyde de cobalt Co$_2$O$_3$, soit 8,29 g, et à 1,10 mole de LiOH H$_2$O, soit 46,16 g, ce qui correspond aux proportions molaires : 0,91 Ni, 0,09 Co, 1 Li.

Le mélange est broyé pendant une heure, placé dans un creuset et chauffé à l'air une heure à 700°C. Le mélange retiré du four est broyé une deuxième fois pendant une heure, remis dans le creuset, puis chauffé à 700°C à l'air. Au bout de 4 heures le creuset est retiré du four pour assurer un refroidissement rapide.

Le solide broyé a été soumis à l'analyse chimique et à l'étude par diffraction des rayons X.

On a dosé le lithium, la somme Ni+Co=M par complexométrie, et le degré d'oxydation n du métal. On a obtenu les résultats suivants consignés dans le tableau III.

TABLEAU II

|  | Li% | M% | n |
|---|---|---|---|
| Valeur trouvée | 6,7 | 60,0 | 2,93 |
| Valeur calculée LiMO | 7,11 | 60,11 | 3 |

Les distances réticulaires d et les intensités des raies de diffraction I obtenues par diffraction des rayons X sont données ci-dessous dans le tableau IV ; h, k,l sont les indices de Miller définissant les plans cristallographiques du matériau.

TABLEAU IV

| h k l | d Å | I |
|---|---|---|
| 003 | 4,69 | 100 |
| 101 | 2,44 | 37 |
| 006 | 2,34 |  |
| 012 | 2,34 | 15 |
| 104 | 2,03 | 30 |
| 015 | 1,879 | 9 |
| 107 | 1,569 | 9 |

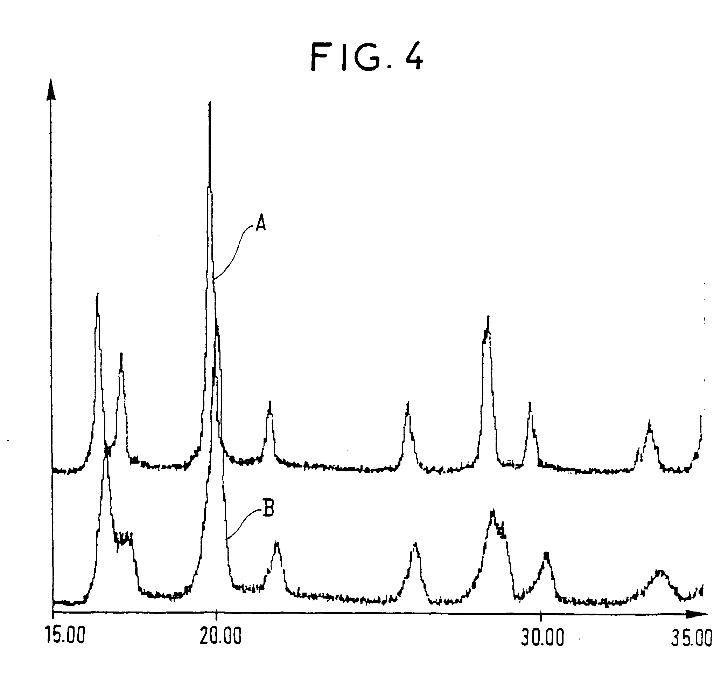

Le diagramme de diffraction des rayons X (MoK ) apparaît dans la figure 4 (courbe A).

Le tableau V reprend les mêmes valeurs pour le matériau $LiNiO_2$, valeurs conformes à la fiche J. C. P. D. S. n° 9-63.

TABLEAU V

| h k l | d Å | I |
|---|---|---|
| 003 | 4,72 | 100 |
| 101 | 2,45 | 40 |
| 006 | 2,36 | 12 |
| 012 | 2,35 | 15 |
| 104 | 2,04 | 95 |
| 015 | 1,862 | 11 |
| 107 | 1,570 | 20 |

On constate que le diagramme obtenu pour le matériau selon l'invention présente de grandes analogies avec celui de $LiNiO_2$. Il existe toutefois des différences dans la position et l'intensité des raies de diffraction, ce qui se produit habituellement quand il se forme une solution solide. Une partie du nickel a donc été substituée par du cobalt dans $LiNiO_2$. D'après l'analyse chimique la formule de ce matériau peut s'écrire $LiO_{0,93} NiO_{0,91} CO_{0,09} O_2$, puisque au départ le nickel et le cobalt étaient dans les proportions molaires 0,91 Ni et 0,09 Co.

EXEMPLE III

On prépare un troisième échantillon de matériau cathodique selon l'invention, de type $LiNi_{1-x} Co_x O_2$, en mélangeant 0,75 mole de NiO, soit 56,03 g, 0,125 mole de $Co_2O_3$, soit 20,73 g, et une mole de LiOH $H_2O$, soit 41,96 g, ce qui correspond aux proportions molaires 0,75 Ni, 0,25 Co, 1 Li.

La synthèse a été effectuée dans les mêmes conditions que dans l'exemple II.

L'analyse chimique du solide obtenu a donné les résultats suivants consignés dans le tableau VI.

TABLEAU VI

|  | Li% | M% | n |
|---|---|---|---|
| Valeur trouvée |  | 60,3 | 2,93 |
| Valeur calculée pour LiMO2 | 7,11 | 60,11 | 3 |

Le spectre de diffraction des rayons X visible dans 1 figure 4 (courbe B) montre que l'on obtient un solide mal cristallisé. On voit que malgré cette mauvaise cristallisation le spectre présente des analogies avec celui de $Li_{0,93}$ $Ni_{0,91}$ $Co_{0,09}$ $O_2$.

On prépare une seconde électrode de la matière suivante. On réalise 0,5 g d'un mélange contenant 10% de matériau selon l'invention Li $Ni_{0,91}$ $CO_{0,09}$ $O_2$, 89% de graphite et 1% de carboxyméthylcellulose, en pourcentages pondéraux. Ce mélange est dispersé dans 2,5 g d'eau.

Une masse de 31 mg de cette composition est déposée sur une plaque d'aluminium de 1 cm². On obtient, après évaporation de l'eau à 45°C, une masse de 5,2 mg du mélange sec.

Cette électrode est plongée dans une solution 2M de $LiAsF_6$ dans le carbonate de diméthyle (DMC), en regard avec une électrode de lithium d'environ 120 mg, offrant une surface de 2,5 cm². Une troisième électrode de lithium est plongée dans la solution, près de la cathode, dont le potentiel servira de référence pour la mesure de la force électromotrice du couple Lithium-Matériau cathodique. Les électrodes étant éloignées les unes des autres dans la solution, un séparateur n'est pas nécessaire.

La cellule étant ainsi constituée, l'expérience consiste à imposer un potentiel contrôlé à la cathode, mesuré par rapport à l'électrode de référence, et à enregistrer le courant d'oxydation ou de réduction la traversant. Le potentiel imposé varie de façon linéaire en fonction du temps à la vitesse de 30 mV/ mn, entre des bornes prédéterminées.

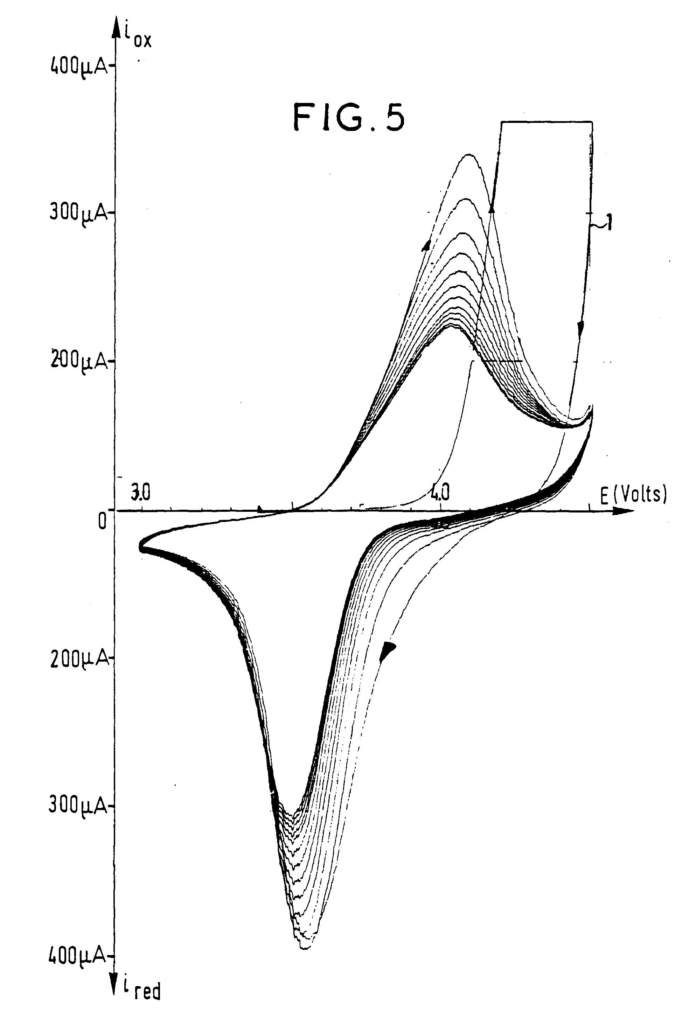

La figure 5 reproduit le diagramme intensité potentiel ainsi obtenu. En abscisses on a reporté le potentiel E en volts de la cathode mesuré par rapport à l'électrode de référence au lithium ; en ordonnées on a reporté le courant d'oxydation $i_{ox}$ ($\mu$A) et le courant de réduction $i_{red}$ ($\mu$A) traversant la cathode.

Ce diagramme montre clairement que la cathode étudiée est réversible selon la réaction :

$$Li\ Ni_{0,91}\ Co_{0,09}\ O_2 \rightleftarrows Li_{1-x}\ Ni_{0,91}\ Co_{0,09}\ O_2 + xLi^+ + xe^-$$

Le domaine d'oxydation du matériau se situe entre 3,5 et 4,5 V, le domaine de réduction entre 4,2 et 3V.

Les courants maxima des pics d'oxydation et de réduction sont :

$i_{red}$ max = 490 $\mu$A et $i_{ox}$ max = 440 $\mu$A.

Pour des électrodes minces de ce type, où la matière active est en faible quantité, on peut rapporter le courant à la quantité totale de matière, supposée réagir au même instant. Ainsi dans ce cas, le courant spécifique j maximum est tel que :

j réduction = 942 mA/g          j oxydation = 846 mA/g

Le premier cycle (numéroté 1 sur la figure 5) est effectué en oxydation, puisque la matière active de départ est sous la forme réduite, contenant le lithium. On constate que pour le premier cycle, le potentiel d'oxydation est plus élevé que pour les cycles suivants.

On prépare une troisième électrode analogue à la seconde électrode selon l'invention, mais avec le composé Li $Ni_{0,75}$ $Co_{0,25}$ $O_2$ préparé plus haut (courbe B de la figure 4).

Les conditions expérimentales sont identiques à celles auxquelles a été soumise la seconde électrode avec une masse de mélange sec égale à 3,7 mg.

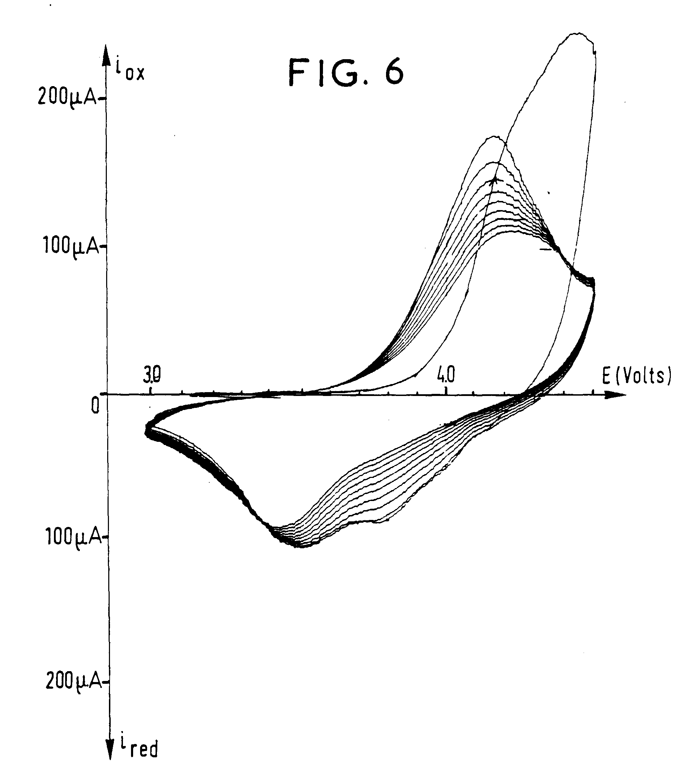

Ce matériau est également réversible, comme le montre le diagramme de la figure 6. Toutefois les courants maxima de réduction obtenus sont inférieurs à ceux de l'exemple précédent, montrés dans la figure 5.

Le courant spécifique $j_{max}$ est tel que : j réduction = 270 mA/g et j oxydation = 486 mA/g.

Les potentiels des maxima des pics d'oxydation et réduction sont identiques à ceux de l'expérience précédente.

## EXEMPLE IV

On prépare un quatrième échantillon de matériau selon l'invention répondant à la formule $LiNi_{0,5}$ $Co_{0,5}$ $O_2$, avec le même procédé que pour les exemples II et III. On réalise ensuite une quatrième électrode à partir de ce matériau. Les conditions expérimentales sont identiques avec une masse de mélange sec égale à 5,8 mg.

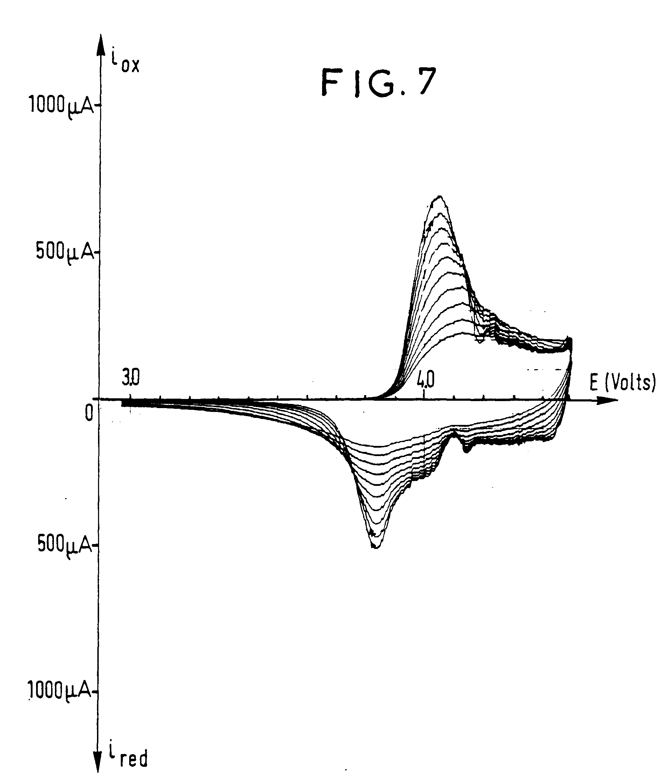

On voit dans cette expérience d'après le diagramme de la figure 7 que le composé est toujours réversible, mais la forme des pics, ainsi que leur positionnement sont très différents.

Les courants spécifiques maxima sont élevés :

j réduction = 862 mA/g ; j oxydation = 1207 mA/g, mais ils décroissent rapidement au cours des cycles.

On constitue maintenant un générateur expérimental comprenant une électrode cathodique du même type que la seconde électrode qui a été testée (figure 5), mais contenant une proportion plus importante de matière active. Les proportions pondérales sont les suivantes :

- Li $Ni_{0,91}$ $Co_{0,09}$ $O_2$ : 30%
- graphite : 69%
- carboxyméthylcellulose : 1%

Une quantité suffisante est déposée sur un support d'aluminium pour obtenir 11,3 mg de mélange sec, sur une surface de 1 cm$^2$, soit une quantité de matériau cathodique de 3,4 mg.

Cette électrode est placée en vis-à-vis d'une électrode de lithium, et séparée de celle-ci par une membrane microporeuse de polypropylène, d'une épaisseur de 50 microns. Les deux électrodes sont fermement maintenues contre le séparateur par deux plaques isolées, ne jouant aucun rôle dans la réaction électrochimique.

Cet assemblage est plongé dans 5 ml d'électrolyte LiAs F$_6$ (2M) dans le DMC, au sein d'une cellule hermétiquement close. Des sorties de courant permettent d'appliquer un courant aux électrodes.

Le lithium est en quantité importante, de capacité plus de 500 fois supérieure à la capacité de la cathode. Il ne limite donc pas les caractéristiques électriques du générateur.

Le générateur ainsi constitué est soumis à des cycles de charge-décharge à un courant fixe imposé de 0,2 mA. Ce courant est suffisamment élevé, rapporté à la quantité de matière cathodique. Le courant spécifique est d'environ 60 mA/g. Ceci permet d'expérimenter valablement les propriétés cinétiques du matériau.

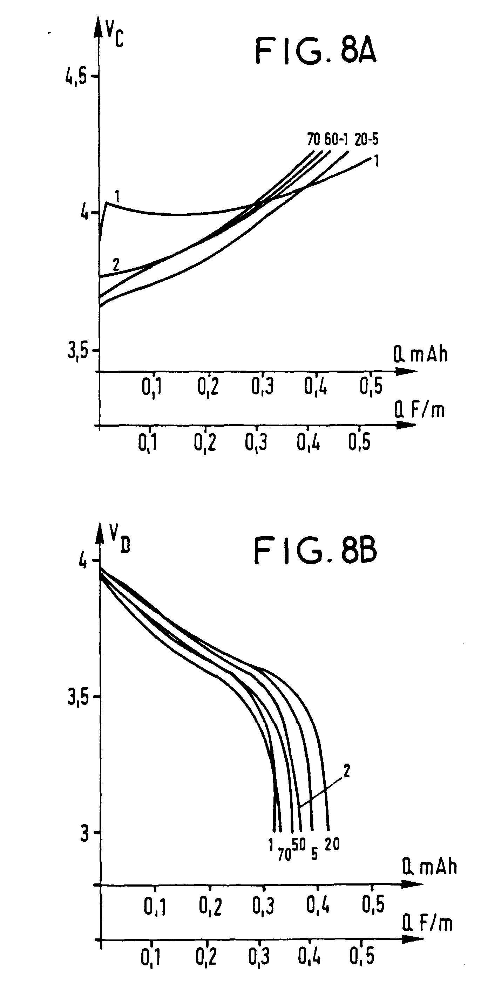

Pendant ces cycles, on enregistre la tension de l'élément. Les figures 8a et 8b représentent les courbes de tension $V_C$ (charge) et $V_D$ (décharge) en fonction de la quantité d'électricité Q mise en jeu, pendant la charge et la décharge (Q est exprimée en mAh et en Faraday/mole). Les numéros de référence indiquent l'ordre des cycles.

Les courbes permettent, en mesurant les quantités d'électricité échangées et la force électromotrice du couple, de calculer le nombre de Faradays impliqués dans la réaction électrochimique complète, ainsi que les caractéristiques énergétiques du couple.

On calcule ainsi lors de cette expérience que 0,44 F/mole ont pu être échangés (cycle n° 20), soit la réaction complète :

$$Li\ Ni_{0,91}\ Co_{0,09}\ O_2 \rightleftarrows Li_{0,56}\ Ni_{0,91}\ CO_{0,09}\ O_2 + 0,44\ Li^+ + 0,44\ e^-$$

Lors de la décharge la réaction de réduction se produit à une tension moyenne de 3,7 V, soit une énergie spécifique libérée de 446 Wh/Kg, rapportée à la masse de matériau cathodique.

Une caractéristique très intéressante de ce matériau réside dans la stabilité de la quantité d'électricité mise en jeu au fur et à mesure des cycles. Elle se distingue en cela de certains matériaux voisins de l'art antérieur, tels que par exemple LiCoO$_2$.

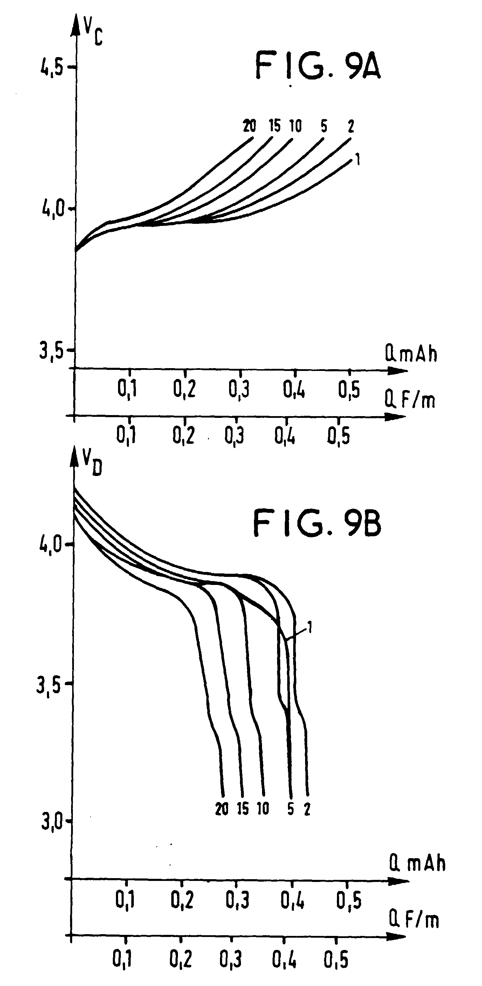

Pour cela on a réalisé une électrode contenant 3,6 mg de LiCoO$_2$, tout à fait analogue à l'électrode Li Ni$_{0,91}$ Co$_{0,09}$ O$_2$ et testée dans des conditions identiques. Les courbes de cyclage apparaissent dans les figures 9a et 9b.

On voit que la capacité, identique à celle de matériau selon l'invention au cycle n° 5 décroît plus rapidement dans le cas de LiCoO$_2$, lorsque l'on passe du 5$^{ième}$ au 20$^{ième}$ cycle.

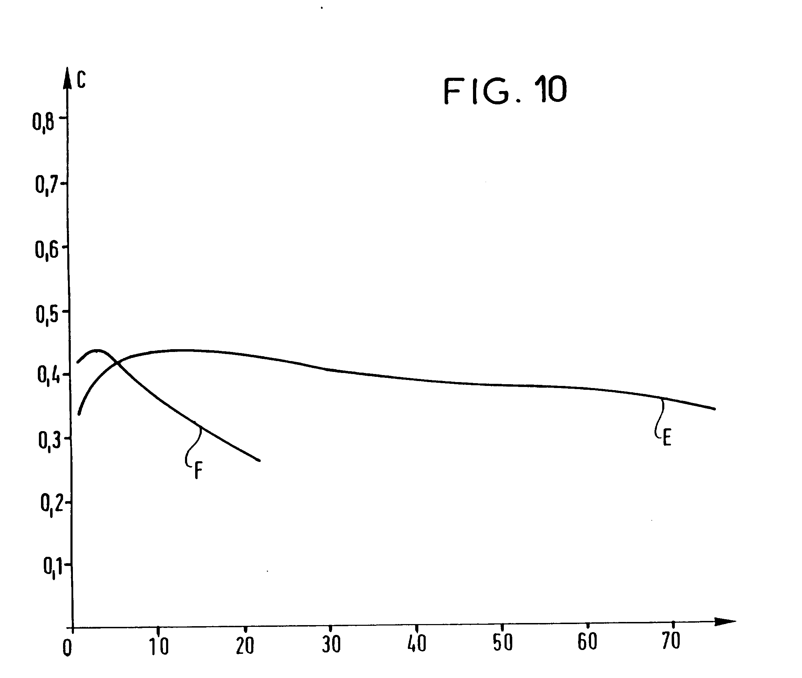

L'avantage du matériau selon l'invention apparaît encore plus clairement dans le diagramme de la figure 10. En abscisses figurent les nombres de cycles n de charge-décharge et en ordonnées la capacité C en Faradays/mole. La courbe F correspond au matériau de l'art antérieur LiCoO$_2$, tandis que la courbe E correspond au matériau selon l'invention.

Bien entendu l'invention n'est pas limitée aux modes de réalisation qui ont été présentés ci-dessus. En particulier, le lithium peut être allié à d'autres métaux.

## Revendications

1. Procédé de fabrication d'un matériau cathodique pour générateur électrochimique secondaire à anode de lithium, matériau répondant à la formule Li$_y$Ni$_{2-y}$O$_2$, caractérisé par le fait que, pour obtenir des valeurs $0.93 < y < 1.22$, on mélange sous forme pulvérulente de l'oxyde de nickel NiO et de l'hydroxyde de lithium hydraté LiOH.H$_2$O, ce dernier étant en léger excès par rapport aux proportions équimolaires LiOH/NiO, et on chauffe à l'air le mélange à une température comprise entre 600°C et 800°C.

2. Procédé de fabrication d'un matériau cathodique pour générateur électrochimique secondaire à anode de lithium, matériau répondant à la formule LiNi$_{1-x}$CO$_x$O$_2$, caractérisé par le fait que, pour obtenir des valeurs $0.09 < x < 0.5$, on mélange sous forme pulvérulente de l'oxyde de nickel NiO, de l'hydroxyde de lithium hydraté LiOH.H$_2$O et de l'oxyde de cobalt Co$_2$O$_3$, et on chauffe à l'air le mélange à une température comprise entre 600°C et 800°C.

3. Procédé de fabrication selon l'une des revendications 1 et 2, caractérisé par le fait que le chauffage est réalisé en deux phases successives avec une phase intermédiaire d'homogénéisation du mélange.

4. Application du matériau obtenu à l'aide du procédé selon l'une des revendications précédentes à une électrode positive de générateur électrochimique secondaire dont l'anode est à base de lithium ou de ses alliages avec d'autres métaux et dont l'électrolyte comporte un solvant choisi parmi les esters, les sulfones et les nitriles, seuls ou en mélange, et un soluté choisi parmi LiAsF$_6$, LiBF$_4$, LiClO$_4$, LiCF$_3$SO$_3$, LiPF$_6$, seuls ou en mélange.

## Patentansprüche

1. Verfahren zur Herstellung eines kathodischen Materials für eine sekundäre elektrochemische Zelle mit einer Lithiumanode, wobei das Material der Formel Li$_y$Ni$_{2-y}$O$_2$ entspricht, dadurch gekennzeichnet, daß zum Erhalt von Werten $0,93 < y < 1,22$ Nickeloxid NiO in Pulverform und hydratiertes Lithiumhydroxid LiOH·H$_2$O gemischt werden, wobei der letztgenannte Stoff in leichtem Überschuß bezüglich der äquimolaren Anteile LiOH/NiO vorliegt, und daß die Mischung auf eine Temperatur zwischen 600 und 800°C an der Luft erhitzt wird.

2. Verfahren zur Herstellung eines kathodischen Materials für eine sekundäre elektrochemische Zelle mit einer Lithiumanode, wobei das Material der Formel LiNi$_{1-x}$Co$_x$O$_2$ entspricht, dadurch gekennzeichnet, daß zum Erhalt von Werten $0,09 < x < 0,5$ Nickeloxid NiO in Pulverform, hydratiertes Lithiumhydroxid LiOH·H$_2$O und Kobaltoxid Co$_2$O$_3$ gemischt werden und daß diese Mischung auf eine Temperatur zwischen 600 und 800°C an der Luft erhitzt wird.

3. Herstellungsverfahren nach einem der Ansprüche 1 und 2, dadurch gekennzeichnet, daß die Erwärmung in zwei aufeinanderfolgenden Phasen erfolgt und daß dazwischen die Mischung homogenisiert wird.

4. Anwendung des Materials, das mit Hilfe des Verfahrens gemäß einem der vorhergehenden Ansprüche erhalten wurde, auf eine positive Elektrode einer sekundären elektrochemischen Zelle mit einer Anode auf Lithiumbasis oder auf der Basis einer Legierung von Lithium mit anderen Metallen und mit einem Elektrolyten, der ein Ester, Sulfon oder Nitril als Lösungsmittel allein oder in Mischung sowie einen gelösten Stoff enthält, der ausgewählt wird unter LiAsF$_6$, LiBF$_4$, LiClO$_4$, LiCF$_3$SO$_3$, LiPF$_6$ allein oder in Mischung.

## Claims

1. A process for manufacturing a cathode material for a lithium anode secondary electrochemical cell, the material satisfying the formula Li$_y$Ni$_{2-y}$O$_2$, the process being characterized by the fact that to obtain values $0.93 < y < 1.22$, nickel oxide NiO and hydrated lithium oxide LiOH·H$_2$O are mixed in powder form, the lithium oxide being in slight excess relative to equimolar proportions of LiOH/NiO, and the mixture is heated in air at a temperature lying in the range 600°C to 800°C.

2. A process for manufacturing a cathode material for a lithium anode secondary electrochemical cell, which material satisfies the formula LiNi$_{1-x}$Co$_x$O$_2$, characterized by the fact that to obtain values $0.09 < x < 0.5$, nickel oxide NiO, hydrated lithium hydroxide LiOH·H$_2$O and cobalt oxide CO$_2$O$_3$ are mixed together in powder form and the mixture is heated to a temperature lying in the range 600°C to 800°C.

3. A process for manufacture according to claim 1 or 2, characterized by the fact that heating is performed in two successive stages with an intermediate stage of homogenizing the mixture.

4. The use of the material obtained by the process of any preceding claim as a positive electrode in a secondary electrochemical cell whbse anode is based on lithium or alloys thereof with other metals and whose electrolyte includes a solvent selected from esters, sulfones, and nitriles, on their own or in mixture, and a solute selected from LiAsF$_6$, LiBF$_4$, LiClO$_4$, LiCF$_3$SO$_3$, LiPF$_6$ on their own or in mixture.

# FIG.1

FIG. 2A

FIG. 2B

FIG. 3A

FIG. 3B

# FIG. 4

FIG. 5

FIG. 6

FIG. 7

FIG. 8A

FIG. 8B

FIG. 9A

FIG. 9B

FIG. 10